# EUROPÄISCHE PATENTANMELDUNG

(11) **EP 1 971 192 A2**
(43) Veröffentlichungstag der Anmeldung: **17.09.2008**
(21) Anmeldenummer: 08001674.4
(22) Anmeldetag: 30.01.2008
(51) Int. Cl.: H05B 41/298

(54) **Vorschaltgerät mit verbesserter EMV-Verträglichkeit**

(30) Priorität: 15.03.2007 DE 102007012413
(71) Anmelder: Vossloh-Schwabe Deutschland GmbH, 73660 Urbach (DE)
(72) Erfinder: Lusch, Andreas, 71394 Kernen i. R. (DE); Merella, Demistoklis, 70197 Stuttgart (DE)
(74) Vertreter: Rüger, Barthelt & Abel Patentanwälte

(57) **Zusammenfassung**

Ein elektronisches Vorschaltgerät mit verminderten HF-Störungen enthält zumindest ein induktives Entstörbauelement (24) in Reihe mit einem seiner elektronischen Schalter (8, 15, 16). Das induktive Entstörbauelement weist eine Impendanzkurve auf, die in dem Frequenzbereich zwischen 30 MHz und 300 MHz ein Maximum hat.

## Beschreibung

Die Erfindung betrifft ein Vorschaltgerät mit verbessertem Störschutz, insbesondere für Niederdruck-Gasentladungslampen, beispielsweise Leuchtstofflampen.

Leuchtstofflampen und auch andere Gasentladungslampen werden zunehmend von elektronischen Vorschaltgeräten betrieben, die zur Versorgung der Entladungslampe eine hochfrequente Wechselspannung bereitstellen. Die Wechselspannung hat in der Regel eine Frequenz von einigen 10 kHz, wobei sie im Wesentlichen rechteckförmig ist.

Einen typischen Vertreter eines solchen Vorschaltgeräts veranschaulicht die DE 32 33 655 A1. Die dort beschriebene Schaltung weist an ihrem Eingang einen auch als Drosselwandler bezeichneten Hochsetzsteller auf, der die gleichgerichtete Netzwechselspannung in eine Zwischenkreisspannung umsetzt. Der Hochsetzsteller enthält eine Drossel, eine Diode, einen Speicherkondensator und einen elektronisch gesteuerten Schalter. Der Hochsetzsteller dient zur Verbesserung des Leistungsfaktors des elektronischen Vorschaltgeräts. Die Zwischenkreisspannung speist eine Wechselrichterhalbbrücke, an die der Lampenkreis angeschlossen ist, der die Gasentladungslampe enthält.

Auch die WO 99/40757 offenbart ein Vorschaltgerät mit gleicher Grundschaltung, allerdings zur Versorgung einer Hochdruckentladungslampe.

Derartige Vorschaltgeräte erzeugen in erheblichem Maße elektromagnetische Störfelder, bzw. Störstrahlung, die unterhalb vorgeschriebener Grenzen bleiben muss.

Die DE 102 26 973 A1 offenbart Entstörmaßnahmen für ein elektronisches Vorschaltgerät, die insbesondere an dem Netzeingang des Vorschaltgeräts ansetzen. Vor dem Gleichrichter sind Entstörkondensatoren und Entstördrosseln angeordnet.

Es verbleibt eine Störstrahlung, die unter den zulässigen Grenzen liegt. Für einige Anwendungsfälle kann diese verbleibende Störstrahlung dennoch störend sein und zu elektromagnetischen Unverträglichkeiten führen.

Es ist deshalb ein Ziel der Erfindung, eine Möglichkeit zur weiteren wirksamen Reduktion der Störstrahlung von Vorschaltgeräten anzugeben.

Diese Aufgabe wird mit dem Vorschaltgerät nach Anspruch 1, nach Anspruch 2, nach Anspruch 3 oder 4 und in bevorzugter Weise durch ein Vorschaltgerät mit der Gesamtheit der Merkmale der Ansprüche 1 bis 3 gelöst.

Das erfindungsgemäße Vorschaltgerät weist einen Hochsetzsteller und einen nachgeordneten Wechselrichter zur Speisung des Lampenkreises auf. Es ist wenigstens ein Entstörbauelement in dem Hochsetzsteller, vor dem Wechselrichter und/oder in dem Lampenkreis vorgesehen. Das induktive Entstörbauelement weist vorzugsweise ein parallelresonantes Verhalten bzw. eine Sperrkreischarakteristik auf. Sein Impedanzmaximum liegt vorzugsweise zwischen 30 MHz und 300 MHz. Dies kann erreicht werden, indem das Entstörbauelement eine induktive Komponente und wenigstens eine zu ihr parallel geschaltete kapazitive Komponente aufweist, wobei die Parallelschaltung wiederum eine Resonanzfrequenz zwischen 30 MHz und 300 MHz festlegt.

Es wird bevorzugt, als induktives Entstörbauelement ein induktives SMD-Bauelement vorzusehen. Solche sind als so genannte SMD-Induktivitäten verfügbar. Sie lassen sich wie sonstige SMD-Bauelemente (z.B. SMD-Widerstände oder SMD-Kondensatoren) auf der Lötseite von SMD-Leiterplatten anordnen.

Vorzugsweise ist sowohl dem Hochsetzsteller als auch dem Wechselrichter als auch dem Lampenkreis jeweils wenigstens ein Entstörbauelement zugeordnet. Das Entstörbauelement des Hochsetzstellers ist vorzugsweise zwischen dem elektronischen Schalter und dem Verbindungspunkt der Drossel und der Diode angeordnet. Es verhindert die Fortpflanzung von HF-Oberwellen, die von dem elektronischen Schalter des Hochsetzstellers ausgehen, in die angeschlossenen Schaltungsteile.

Außerdem oder alternativ wird ein solches Entstörbauelement, das dem Wechselrichter zugeordnet ist, vorzugsweise in der Verbindungsleitung angeordnet, die die Wechselrichterhalbbrücke aus dem Speicherkondensator speist. Hochfrequente Schwingungen, die von Oberwellen des Speisestroms der Wechselrichterhalbbrücke ausgehen, werden auf diese Weise gesperrt.

Des Weiteren hat es sich als vorteilhaft herausgestellt, zusätzlich oder alternativ zu den vorgenannten Maßnahmen mindestens ein Entstörbauelement in dem Lampenkreis anzuordnen. Vorzugsweise ist in jedem Zweig des Lampenkreises, der den Lampenkreis mit der Wechselrichterhalbbrücke verbindet, jeweils ein Entstörbauelement angeordnet. Auf diese Weise werden einerseits von der Wechselrichterhalbbrücke ausgehende Schwingungen von dem Lampenkreis und andererseits aus dem Lampenkreis herrührende Störungen von dem Vorschaltgerät ferngehalten.

Das dritte Entstörbauelement ist vorzugsweise zwischen einem Koppelkondensator und einer Strombegrenzungsdrossel des Lampenkreises angeordnet und mit diesen in Reihe geschaltet. Dies ergibt eine Entstörwirkung, die höher ist als bei einer anderen Reihenfolge der drei miteinander in Reihe geschalteten Bauelemente.

Es können weitere Entstörmaßnahmen unter Verwendung nicht induktiver Bauelemente getroffen werden. Beispielsweise kann es vorteilhaft sein, in zumindest einer der zu den Steuerelektroden der elektronischen Schalter führenden Leitungen einen Widerstand vorzusehen. Vorzugsweise ist dieser Widerstand so bemessen, dass er zusammen mit der Eingangskapazität des vorzugsweise feldgesteuerten elektronischen Schalters einen Tiefpass bildet, dessen Eckfrequenz zwischen 30 MHz und 300 MHz liegt.

Des Weiteren kann es vorteilhaft sein, zumindest die elektronischen Schalter der Wechselrichterhalbbrücke mit Snubber-Kondensatoren zu versehen. Dieser ist dem elektronischen Schalter vorzugsweise parallel geschaltet.

Die Gesamtheit der vorgenannten Maßnahmen führt zu einem bislang kaum erreichten niedrigen Störniveau und zu höchster elektromagnetischer Verträglichkeit.

Weitere Einzelheiten vorteilhafter Ausführungsformen der Erfindung ergeben sich aus Unteransprüchen, aus der Zeichnung oder der Beschreibung. Die Beschreibung beschränkt sich auf wesentliche Aspekte der Erfindung und sonstiger Gegebenheiten. Die Zeichnung ist in gewohnter Weise ergänzend heranzuziehen.

In der Zeichnung sind Ausführungsbeispiele der Erfindung veranschaulicht. Es zeigen:
Figur 1 ein elektronisches Vorschaltgerät mit zusätzlichen Entstörbauelementen in Prinzipdarstellung,
Figur 2 ein Vorschaltgerät mit zusätzlichen Entstörmaßnahmen in schematischer Prinzipdarstellung,
Figur 3 ein Vorschaltgerät mit weiteren Entstörmaßnahmen in Prinzipdarstellung,
Figur 4 ein Entstörbauelement in teilweise schematisierter Darstellung und
Figur 5 ein Ersatzschaltbild eines Entstörbauelements.

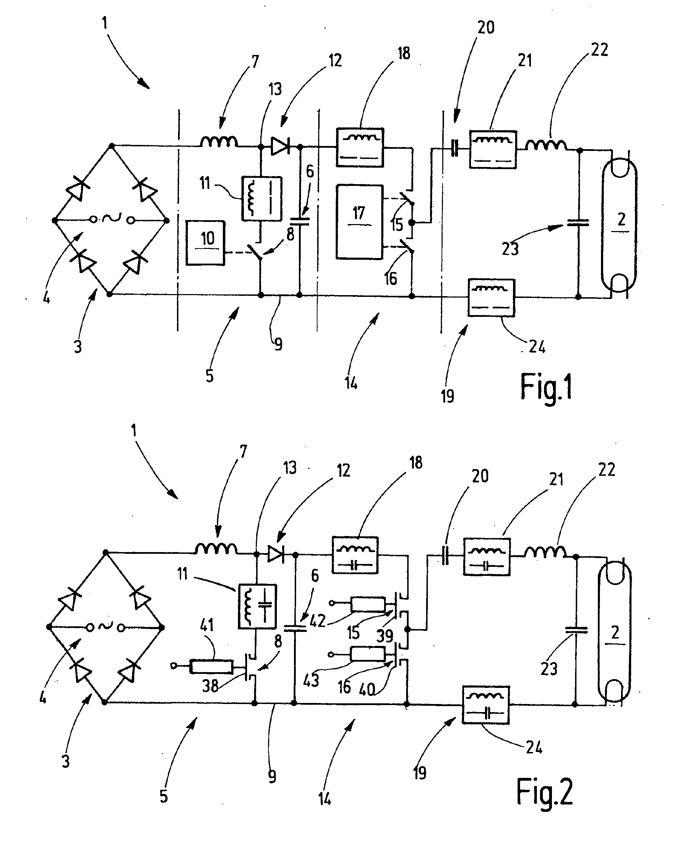

In Figur 1 ist ein Vorschaltgerät 1 veranschaulicht, das zum Betrieb einer Niederdruck-Gasentladungslampe dient. Eine solche ist beispielsweise durch die in Figur 1 schematisch angedeutete Leuchtstofflampe 2 gebildet.

Das Vorschaltgerät 1 enthält mehrere Funktionsgruppen. Eingangsseitig ist ein Netzgleichrichter 3 vorgesehen, z.B. in Form einer Graetzbrücke. Die Graetzbrücke kann an ihrem Eingang 4 direkt oder auch über Netzfilter, wie sie der eingangs genannten DE 102 26 973 A1 zu entnehmen sind, an ein öffentliches elektrisches Versorgungsnetz angeschlossen sein. Ausgangsseitig ist die Graetzbrücke 3 mit einem Hochsetzsteller 5 verbunden, der die von der Graetzbrücke 3 abgegebene wellige Gleichspannung in eine an einem Speicherkondensator 6 anstehende Gleichspannung umsetzt. Der Hochsetzsteller 5 weist dazu eine Drossel 7, die an die Graetzbrücke 3 angeschlossen ist, und einen elektronischen Schalter 8, z.B. in Form eines Feldeffekttransistors, auf. Der Schalter 8 ist mit Masse 9 verbunden. Seine Steuerelektrode ist von einer elektronischen Steuereinrichtung 10 gesteuert.

Zwischen dem elektronischen Schalter 8 und der Drossel 7 ist ein Entstörbauelement 11 angeordnet. Dieses hat vorwiegend induktiven Charakter und eine Maximalimpedanz bei einer Frequenz, die zwischen 30 MHz und 300 MHz liegt. Das Entstörbauelement 11 ist vorzugsweise eine so genannte SMD-Induktivität.

Von der Drossel 7 führt eine Diode 12 zu dem Speicherkondensator 6. Zwischen der Drossel 7 und der Diode 12 liegt ein Verbindungspunkt 13, an den das Entstörbauelement 11 angeschlossen ist.

Auf den Hochsetzsteller folgt als nächste Baugruppe ein Wechselrichter 14. Dieser ist beispielsweise als Wechselrichterhalbbrücke ausgebildet und enthält zwei elektronisch steuerbare Schalter 15, 16. Diese werden von einer Ansteuerschaltung 17 im Gegentakt geöffnet und geschlossen. Während die Wechselrichterhalbbrücke einerseits mit Masse 9 verbunden ist, ist sie an ihrem anderen Ende über ein induktives Entstörbauelement 18 mit dem Speicherkondensator 6 verbunden. Sie erhält ihren Betriebsstrom über das Entstörbauelement 18. Der Verbindungspunkt der beiden elektronischen Schalter 15, 16 bildet den Ausgang der Wechselrichterhalbbrücke, der an einen Lampenkreis 19 angeschlossen ist. Dieser enthält miteinander in Reihe geschaltet einen Koppelkondensator 20, ein induktives Entstörbauelement 21, eine Strombegrenzungsdrossel 22, die Lampe 2 mit einem parallel geschalteten Kondensator 23 und ein weiteres induktives Entstörbauelement 24.

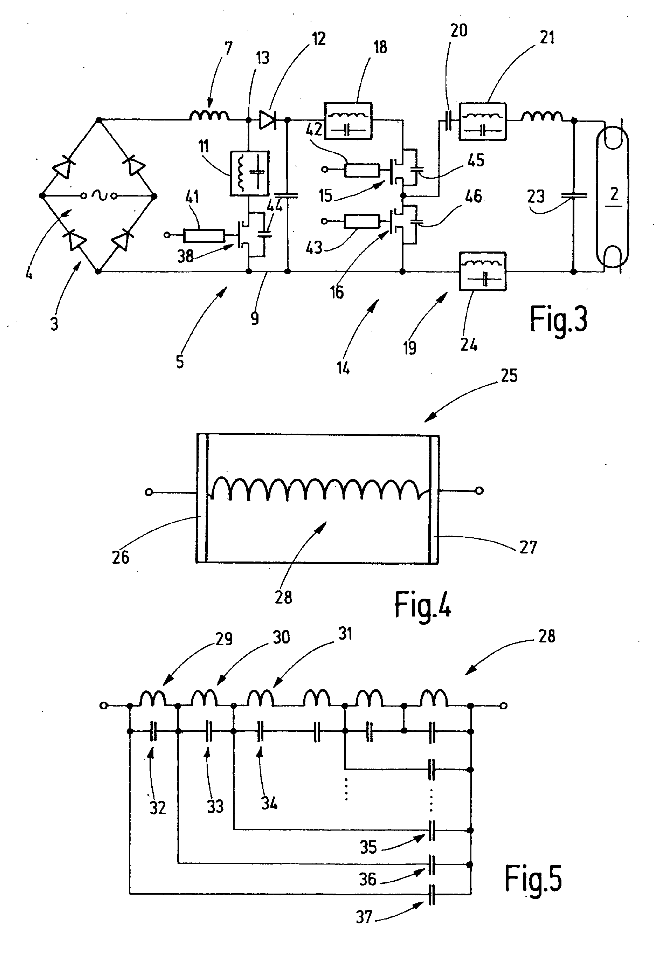

Die induktiven Entstörbauelemente 11, 18, 21, 24 sind untereinander vorzugsweise im Wesentlichen gleich ausgebildet. Es handelt sich dabei vorzugsweise um SMD-Spulen, die außer ihrer Nenninduktivität eine nicht vernachlässigbare Kapazität aufweisen. Die prinzipielle Struktur einer solchen SMD-Induktivität ist in Figur 4 durch das symbolisch veranschaulichte Bauelement 25 veranschaulicht. Es weist z.B. eine quaderförmige Grundform auf, wobei voneinander weg weisende, zueinander parallele Flächen dieser Grundform als Elektroden 26, 27 ausgebildet sind. Diese können als Lötkontakte ausgebildet sein, um die elektrischen Anschlüsse zu einer nicht weiter veranschaulichten Leiterplatte herzustellen. Der Körper des Bauelements 25 enthält eine induktive Struktur 28, z.B. in Form einer Wicklung, eines Mehrlagenaufbaus oder einer ähnlichen Anordnung. Zwischen den Elektroden 26, 27 ist eine Kapazität vorhanden. Ebenso können Kapazitäten zwischen einzelnen Windungen der Struktur 28 auftreten. Dies ist in Figur 5 veranschaulicht. Die induktive Struktur 28 weist hier einzelne Windungen oder Wicklungsabschnitte 29, 30, 31 usw. auf. Zwischen diesen sind Wicklungskapazitäten 32, 33, 34 usw. ausgebildet. Außerdem haben die einzelnen Windungen 29 bis 31 jeweils eine Kapazität 35, 36, 37 gegen die Elektroden 26, 27.

Dieser Aufbau führt zu einer Parallelresonanz zwischen dem induktiven Anteil und dem kapazitiven Anteil des Bauelements 25. Die Resonanzfrequenz liegt vorzugsweise zwischen 30 MHz und 300 MHz. Gegebenenfalls kann die gewünschte Resonanzfrequenz gezielt durch Parallelschaltung eines Kondensators zu dem Bauelement 25 herbeigeführt oder verändert werden. Die Resonanzfrequenz liegt im Bereich der Maximalimpendanz des Bauelements 25 zwischen 30 MHz und 300 MHz.

Das insoweit beschriebene Vorschaltgerät 1 arbeitet wie folgt:

In Betrieb setzt der Hochsetzsteller 5 die eingangsseitig anliegende gleichgerichtete Wechselspannung in einen pulsierenden Gleichstrom um, der den Speicherkondensator 6 auf eine gewünschte Spannung auflädt. Der Schalter 8 wird dabei mit einer Frequenz von z.B. einigen 10 Kilohertz ein- und ausgeschaltet. Das Ein- und Ausschalten erfolgt mit sehr hoher Flankensteilheit. Das entstehende Rechtecksignal hat Frequenzanteile, die in den hohen Megahertzbereich hineinreichen können (beispielsweise bis zu über 100 MHz). In diesem Frequenzbereich hat das Entstörbauelement 11 seine Maximalimpedanz, wohingegen es die einigen zehn Kilohertz der Grundwelle der Schaltfrequenz ungehindert passieren lässt. Es verhindert insoweit lediglich die Fortpflanzung der hochfrequenten Störungen während es das Rechtecksignal im Wesentlichen unverzerrt passieren lässt.

In gleicher Weise arbeitet das Entstörbauelement 18 und hindert die an der Wechselrichterhalbbrücke entstehenden hochfrequenten Störungen daran, weitere Schaltungsteile zu erreichen und von diesen abgestrahlt zu werden oder in das Netz zu gelangen.

An dem Ausgang der Wechselrichterhalbbrücke liegt eine Rechteckwechselspannung mit einer Amplitude von mehreren 100 Volt an. Die Entstörbauelemente 21, 24 verhindert nun, dass Störfrequenzen im 100 MHz-Bereich zu der Leuchtstofflampe 2 laufen. Dies im Wesentlichen unabhängig von der Betriebsfrequenz, d.h. sowohl beim Zünden als auch bei normalem Betrieb.

Die Entstörung des Vorschaltgeräts 1 kann mit den Maßnahmen nach Figur 2 noch verbessert werden. Die elektronischen Schalter 8, 15, 16 sind z.B. Feldeffekttransistoren oder andere feldgesteuerte Bauelemente. Das jeweilige Gate 38, 39, 40 wird mit einer rechteckigen Steuerwechselspannung beaufschlagt. Das Gate 38, 39, 40 hat eine gegebene Kapazität. In der zu der Steuereinrichtung 10 bzw. der Ansteuerschaltung 17 führenden Leitung sind z.B. Widerstände 41, 42, 43 angeordnet, die mit den Gate-Kapazitäten einen Tiefpass bilden. Dieser hat vorzugsweise eine 3-dB-Eckfrequenz zwischen 30 MHz und 300 MHz. Diese Maßnahme bewirkt eine Verringerung der von den elektronischen Schaltern 8, 15, 16 erzeugten Störungen ohne wesentliche Beeinträchtigung der Flankensteilheit des jeweiligen Schaltvorgangs.

Figur 3 veranschaulicht eine weitere Entstörmaßnahme, die alternativ oder zusätzlich ausgeführt werden kann. Den elektronischen Schaltern 8, 15, 16 sind Snubber-Kondensatoren 44 bis 46 parallel geschaltet. Diese vermindern die Störungen weiter. Ansonsten gilt die vorige Beschreibung unter Zugrundelegung der bereits eingeführten Bezugszeichen entsprechend.

Ein elektronisches Vorschaltgerät mit verminderten HF-Störungen enthält zumindest ein induktives Entstörbauelement 24 in Reihe mit einem seiner elektronischen Schalter 8, 15, 16. Das induktive Entstörbauelement weist eine Impendanzkurve auf, die in dem Frequenzbereich zwischen 30 MHz und 300 MHz ein Maximum hat.

### Bezugszeichenliste:

- 1: Vorschaltgerät
- 2: Leuchtstofflampe
- 3: Netzgleichrichter
- 4: Eingang
- 5: Hochsetzsteller
- 6: Speicherkondensator
- 7: Drossel
- 8: Schalter
- 9: Masse
- 10: Steuereinrichtung
- 11: Entstörbauelement
- 12: Diode
- 13: Verbindungspunkt
- 14: Wechselrichter
- 15, 16: Schalter
- 17: Ansteuerschaltung
- 18: Entstörbauelement
- 19: Lampenkreis
- 20: Koppelkondensator
- 21: Entstörbauelement
- 22: Strombegrenzungsdrossel
- 23: Kondensator
- 24: Entstörbauelement
- 25: Bauelement
- 26, 27: Elektrode
- 28: induktive Struktur
- 29 - 31: Windungen
- 32 - 37: Kapazitäten
- 38 - 40: Gate
- 41 - 43: Widerstände
- 44 - 46: Snubber-Kondensatoren

## Patentansprüche

1. Vorschaltgerät (1) mit verbessertem Störschutz, insbesondere für Niederdruck-Gasentladungslampen (2),
mit einem Hochsetzsteller (5), zu dem mindestens eine Drossel (7), ein elektronischer Schalter (8), eine Diode (12) und ein Speicherkondensator (6) gehören,
mit einem ersten induktiven Entstörbauelement (11), das mit dem elektronischen Schalter (8) in Reihe geschaltet ist und das ein Impedanzmaximum aufweist,
mit einem Wechselrichter (14), der zumindest zwei miteinander in Reihe geschaltete elektronische Schalter (15, 16) aufweist, und
mit einem Lampenkreis (19), der an den Wechselrichter (14) angeschlossen ist und der eine Gasentladungslampe (2) enthält.

2. Vorschaltgerät (1) mit verbessertem Störschutz, insbesondere für Niederdruck-Gasentladungslampen (2),
mit einem Hochsetzsteller (5), zu dem mindestens eine Drossel (7), ein elektronischer Schalter (8), eine Diode (12) und ein Speicherkondensator (6) gehören,
mit einem Wechselrichter (14), der zumindest zwei miteinander in Reihe geschaltete elektronische Schalter (15, 16) aufweist,
mit einem zweiten induktiven Entstörbauelement (18), das mit dem Wechselrichter (14) in Reihe geschaltet ist und das ein Impedanzmaximum aufweist,
mit einem Lampenkreis (19), der an den Wechselrichter (14) angeschlossen ist und der eine Gasentladungslampe (2) enthält.

3. Vorschaltgerät (1) mit verbessertem Störschutz, insbesondere für Niederdruck-Gasentladungslampen (2),
mit einem Hochsetzsteller (5), zu dem mindestens eine Drossel (7), ein elektronischer Schalter (8), eine Diode (12) und ein Speicherkondensator (6) gehören,
mit einem Wechselrichter (14), der zumindest zwei miteinander in Reihe geschaltete elektronische Schalter (15, 16) aufweist, und
mit einem Lampenkreis (19), der an den Wechselrichter (14) angeschlossen ist und der eine Gasentladungslampe (2) enthält,
mit einem dritten induktiven Entstörbauelement (21), das in dem Lampenkreis (19) angeordnet ist und das ein Impedanzmaximum aufweist.

4. Vorschaltgerät nach Anspruch 3, **dadurch gekennzeichnet, dass** der Lampenkreis (19) ein viertes induktives Entstörbauelement (24) aufweist.

5. Vorschaltgerät nach Anspruch 1, 2, 3 oder 4, **dadurch gekennzeichnet, dass** das Entstörbauelement (11, 18, 21, 24) parallelresonantes Verhalten mit einer Eigenresonanz in dem Frequenzbereich von 30 MHz bis 300 MHz aufweist.

6. Vorschaltgerät nach Anspruch 1, 2, 3 oder 4, **dadurch gekennzeichnet, dass** das Entstörbauelement (11, 18, 21, 24) Sperrkreischarakteristik aufweist.

7. Vorschaltgerät nach Anspruch 1, 2, 3 oder 4, **dadurch gekennzeichnet, dass** das Entstörbauelement (11, 18, 21, 24) eine induktive Komponente und eine zu ihr parallel geschaltete kapazitive Komponente aufweist, deren Resonanzfrequenz zwischen 30 MHz und 300 MHz liegt.

8. Vorschaltgerät nach Anspruch 1, 2, 3 oder 4, **dadurch gekennzeichnet, dass** das Entstörbauelement (11, 18, 21, 24) ein induktives SMD-Bauelement ist.

9. Vorschaltgerät nach Anspruch 1, **dadurch gekennzeichnet, dass** das Entstörbauelement (11) zwischen dem elektronischen Schalter (8) des Hochsetzstellers (5) und einem Verbindungspunkt (13) zwischen der Drossel (7) und der Diode (12) angeordnet ist.

10. Vorschaltgerät nach Anspruch 2, **dadurch gekennzeichnet, dass** das zweite Entstörbauelement (18) zwischen einem der beiden elektronischen Schalter (15, 16) des Wechselrichters (14) und dem Speicherkondensator (6) angeordnet ist.

11. Vorschaltgerät nach Anspruch 1, 2, 3 oder 4, **dadurch gekennzeichnet, dass** der Lampenkreis (19) eine zu der Gasentladungslampe (2) in Reihe geschaltete Strombegrenzungsdrossel (22) enthält.

12. Vorschaltgerät nach Anspruch 1, 2, 3 oder 4, **dadurch gekennzeichnet, dass** der Lampenkreis (19) einen zu der Gasentladungslampe (2) in Reihe geschalteten Koppelkondensator (20) enthält.

13. Vorschaltgerät nach Anspruch 1, 2, 3 oder 4, **dadurch gekennzeichnet, dass** der Lampenkreis (19) einen zu der Gasentladungslampe (2) parallel geschalteten Kondensator (23) enthält.

14. Vorschaltgerät nach Anspruch 3, **dadurch gekennzeichnet, dass** das dritte Entstörbauelement (21) zwischen einem Koppelkondensator (20) und einer Strombegrenzungsdrossel (22) des Lampenkreises (19) angeordnet und mit diesen in Reihe geschaltet ist.

15. Vorschaltgerät nach Anspruch 4, **dadurch gekennzeichnet, dass** das dritte und das vierte Entstörbauelement (21, 24) an unterschiedlichen Seiten der Gasentladungslampe (2) angeordnet sind.

16. Vorschaltgerät nach einem der vorstehenden Ansprüche, **dadurch gekennzeichnet, dass** die elektronischen Schalter (8, 15, 16) Transistoren mit isoliertem Gate sind.

17. Vorschaltgerät nach Anspruch 17, **dadurch gekennzeichnet, dass** die elektronischen Schalter (8, 15, 16) MOS-FETs sind.

18. Vorschaltgerät nach einem der vorstehenden Ansprüche, **dadurch gekennzeichnet, dass** die elektronischen Schalter (8, 15, 16) jeweils ein Gate (38, 39, 40) aufweisen, dem der jeweilige Ansteuerimpuls über einen Vorwiderstand (41, 42, 43) zugeleitet ist.

19. Vorschaltgerät nach Anspruch 18, **dadurch gekennzeichnet, dass** der Widerstand (41, 42, 43) und die Kapazität des angeschlossenen Gates (38, 39, 40) einen Tiefpass mit einer Eckfrequenz zwischen 30 MHz und 300 MHz bilden.

20. Vorschaltgerät nach einem der vorstehenden Ansprüche, **dadurch gekennzeichnet, dass** wenigstens einem der elektronischen Schalter (8, 15, 16) ein Snubber-Kondensator (44, 45, 46) parallelgeschaltet ist.
